# EUROPÄISCHE PATENTANMELDUNG

(11) **EP 4 776 753 A1**
(43) Veröffentlichungstag der Anmeldung: **15.07.2026**
(21) Anmeldenummer: 25151613.4
(22) Anmeldetag: 13.01.2025
(51) Int. Cl.: H05B 3/00, B29C 35/08, B29C 64/295

(54) **HEIZVORRICHTUNG, EXTRUSIONSVORRICHTUNG SOWIE VERFAHREN ZUR EXTRUSION**

(71) Anmelder: LEAM Technologies GmbH, 82234 Weßling (DE)
(72) Erfinder: CONSUL, Patrick Henry, 85410 Haag an der Amper (DE); BÖCKL, Benno Eugen, 80539 München (DE); WANG, Ting, 81735 München (DE)
(74) Vertreter: Winter, Brandl - Partnerschaft mbB

(57) **Zusammenfassung**

Die vorliegende Offenbarung betrifft eine Heizvorrichtung (4) zum Erwärmen einer durch Extrusion ausgebrachten Materialschicht, mit einem Träger (8), der eingerichtet ist, sich mit einer Bewegung eines Extruders (6) einer Extrusionsvorrichtung (2) mitzubewegen, einer an dem Träger (8) angebrachten, elektromagnetischen Energiequelle (10), die eingerichtet ist, elektromagnetische Energie in die ausgebrachte Materialschicht einzubringen, wobei die Energiequelle (10) eine weiße Leuchtdiode aufweist und die Heizvorrichtung (4) eine Kühlvorrichtung (12) zum Kühlen der weißen Leuchtdiode aufweist. Zudem betrifft die vorliegende Offenbarung eine Extrusionsvorrichtung (2) zur Extrusion eines Objekts, mit einer solchen Heizvorrichtung (4) und einem Extruder (6), sowie ein Verfahren zur Extrusion eines Objekts, mit einer solchen Extrusionsvorrichtung (2).

## Beschreibung

### Technisches Gebiet

Die vorliegende Offenbarung betrifft eine Heizvorrichtung zum Erwärmen einer (bereits) durch (Material-)Extrusion ausgebrachten Materialschicht. Zudem betrifft die Offenbarung eine Extrusionsvorrichtung zur (Material-)Extrusion eines Objekts sowie eine Verfahren zur (Material-)Extrusion eines Objekts.

### Hintergrund der Offenbarung

(Material-)Extrusion wird eingesetzt, um ein dreidimensionales Objekt herzustellen. Dabei wird das Material, insbesondere ein Kunststoff, geschmolzen, durch einen Extruder/eine Düse strangförmig extrudiert/herausgefördert und entlang von Bahnen schichtweise abgelegt. Das heißt, dass das Material auf einer bereits extrudierten Materialschicht abgelegt wird, wobei sich die bereits extrudierte Materialschicht stark genug abgekühlt und damit einhergehend so weit verfestigt haben muss, dass sie eine neue Materialschicht tragen kann.

Problematisch ist dabei jedoch, dass die bereits extrudierte Materialschicht, insbesondere abhängig von vorliegenden Umgebungsbedingungen und verstrichener Zeit seit ihrem Austrag, bereits so weit abgekühlt sein kann, dass sich die neue Materialschicht nicht vollständig mit der bereits extrudierten Materialschicht verbindet. Dies hat zur Folge, dass die Festigkeit des Objekts senkrecht zu den Materialschichten stark reduziert ist, so dass nur solche Bauteile, die geringen mechanischen Belastungen standhalten müssen, durch Extrusion hergestellt werden. Zudem besteht das Problem, dass die Festigkeit des Objekts von außen nicht erkannt werden können. Entsprechend kann die Bauteilqualität erst im Fall eines Versagens beurteilt werden.

Aus dem Stand der Technik sind bereits Lösungen bekannt, die sich mit einer Verbesserung der Verbindung zwischen zwei extrudierten Materialschichten beschäftigen. Zum Beispiel offenbart die US 2021/0170682 A1 eine Lösung, bei der eine zusätzliche Heizvorrichtung eingesetzt wird, um eine (bereits) durch Extrusion ausgebrachte Materialschicht (direkt) vor dem Aufbringen einer neuen Materialschicht aufzuheizen, um die Verbindung zwischen der vorigen Materialschicht (d.h. der bereist ausgebrachten Materialschicht) und der aktuellen Materialschicht (d.h. der noch/als nächstes auszubringenden Materialschicht) zu verbessern. Die eingesetzte Heizvorrichtung enthält einen Laser oder einen Infrarotstrahler, mittels dem Energie in die durch Extrusion ausgebrachte Materialschicht eingebracht wird, um eine (Oberflächen-)Temperatur der durch Extrusion ausgebrachten Materialschicht in einen bestimmten Temperaturbereich zu erhöhen.

Der Stand der Technik hat jedoch den Nachteil, dass ein Laser zwar gut fokussierbar ist und eine hohe Reaktionsgeschwindigkeit hat, aber als eingesetzte Heizvorrichtung gefährlich für einen Menschen ist und entsprechend besondere Sicherheitsvorkehrungen erfordert, die jedoch aufwändig und kostenintensiv sind. Auch ein Infrarotstrahler bringt den Nachteil mit sich, dass gewisse Sicherheitsvorkehrungen getroffen werden müssen, und der Infrarotstrahler zudem nicht gut fokussierbar ist und eine niedrige Reaktionsgeschwindigkeit hat.

### Zusammenfassung der Offenbarung

Es ist die Aufgabe der vorliegenden Offenbarung, die Nachteile aus dem Stand der Technik zu vermeiden oder wenigstens zu verringern. Insbesondere sollen eine Heizvorrichtung, eine Extrusionsvorrichtung mit der Heizvorrichtung sowie ein Verfahren zur Extrusion bereitgestellt werden, mit denen eine bereits durch Extrusion ausgebrachte Materialschicht ausreichend weit aufgeheizt werden kann, um eine vollständige Verbindung zwischen den Materialschichten zu gewährleisten, und die gleichzeitig einfach, kostengünstig und sicher implementiert werden können.

Die Aufgabe der vorliegenden Offenbarung wird durch eine Heizvorrichtung mit den Merkmalen des Patentanspruchs 1 sowie durch eine Extrusionsvorrichtung und ein Verfahren zur Extrusion mit den Merkmalen der nebengeordneten Patentansprüche gelöst. Vorteilhafte Weiterbildungen sind Gegenstand der Unteransprüche.

Demnach betrifft die vorliegende Offenbarung eine Heizvorrichtung zum Erwärmen einer durch Extrusion ausgebrachten Materialschicht. Das heißt, dass die Heizvorrichtung eingerichtet ist, Wärme in eine bereits extrudierte/abgelegte Materialschicht (und nicht eine noch abzulegende Materialschicht) einzubringen.

Die Heizvorrichtung weist einen Träger auf. Der Träger ist eingerichtet, sich mit einer Bewegung eines Extruders einer Extrusionsvorrichtung mitzubewegen. Insbesondere kann der Träger fest an dem Extruder anbringbar sein. Vorzugsweise kann der Träger (geschlossen) ringförmig ausgebildet sein. Das heißt, dass der Träger eine zentrale Öffnung aufweisen kann.

Die Heizvorrichtung weist eine elektromagnetische Energiequelle auf. Die Energiequelle ist an dem Träger angebracht. Die Energiequelle ist eingerichtet, elektromagnetische Energie in die ausgebrachte Materialschicht einzubringen. Vorzugsweise kann die Energiequelle an einer (werkstückzugewandten bzw. der bereits ausgebrachten Materialschicht zugewandten) Unterseite des Trägers angebracht sein. Das heißt, dass die Energiequelle so angeordnet ist, dass eine optische Achse der Energiequelle ausgehend von der Energiequelle in Richtung zu der bereits ausgebrachten Materialschicht verläuft.

Gemäß einem zentralen Aspekt der vorliegenden Offenbarung weist die Energiequelle eine weiße Leuchtdiode (LED) auf. Das heißt, dass die Energiequelle eine solche Energiequelle ist, die inkohärentes Licht bzw. Licht mit unterschiedlichen Wellenlängen im für den Menschen sichtbaren Spektrum aussendet. Es wird also keine kohärente Energiequelle, wie etwa ein Laser, eingesetzt. Es wird auch kein Infrarotstrahler, der ein für den Menschen nicht-sichtbares Spektrum hat, eingesetzt.

Vorzugsweise kann die weiße Leuchtdiode einen Halbleiter haben, der bis zu einer Maximaltemperatur von mindestens 100°C, 125°C, 150°C, 175°C oder 200°C betreibbar ist. Vorzugsweise kann die weiße Leuchtdiode einen inneren thermischen Widerstand von maximal 1 K/W, 0,9 K/W, 0,8 K/W, 0,7 K/W, 0,6 K/W, 0,5 K/W, 0,4 K/W, 0,3 K/W, 0,2 K/W oder 0,1 K/W haben. Dies hat den Vorteil, dass an der weißen Leuchtdiode eine verhältnismäßig hohe elektrische Leistung bei geringer (für eine Beschädigung der Leuchtdiode relevante) Erwärmung des Halbleiters der Leuchtdiode eingespeist werden kann.

Gemäß dem zentralen Aspekt weist die Heizvorrichtung eine Kühlvorrichtung zum Kühlen der weißen Leuchtdiode auf. Insbesondere kann die Kühlvorrichtung so eingerichtet sein, dass eine (trägerzugewandte) Unterseite der weißen Leuchtdiode (im Betrieb der Leuchtdiode und der Kühlvorrichtung) eine Oberflächentemperatur kleiner als 35°C, 30°C, 25°C, 20°C oder 15°C hat. Dies ermöglicht, dass (in Abhängigkeit der Maximaltemperatur des Halbleiters und des inneren thermischen Widerstands der Leuchtdiode) besonders hohe elektrische Leistungen in die Leuchtdiode eingespeist werden können, ohne dass die Leuchtdiode zerstört wird.

Mit anderen Worten wird eine (stark) gekühlte weiße Leuchtdiode als Energiequelle eingesetzt, um die Leuchtdiode über für Leuchtdioden übliche Betriebsparameter hinaus zu betreiben, wodurch erst möglich gemacht wird, mit der Leuchtdiode die zum Aufheizen der ausgebrachten Materialschicht erforderliche Energie aufzubringen.

Mit anderen Worten wird als Energiequelle eine herkömmliche (weiße) Leuchtdiode eingesetzt, die aufgrund der Kühlung in höheren Leistungsbereichen betrieben werden kann, so dass ausreichend Energie in die ausgebrachte Materialschicht eingebracht wird, ohne dass die Leuchtdiode aufgrund des Betriebs in den höheren Leistungsbereichen zerstört wird.

Der Einsatz der weißen Leuchtdiode hat den Vorteil, dass eine für den Menschen eher ungefährliche Energiequelle eingesetzt wird, die (insbesondere im Gegensatz zu einem Laser) bei ihrem Betrieb keine oder kaum Sicherheitsvorkehrungen erfordert. Dadurch, dass die weiße Leuchtdiode (im Gegensatz zu einem Laser oder einem Infrarotstrahler) ein für den Menschen sichtbares Spektrum hat, besteht ein der Energiequelle inhärenter Schutz für den Menschen, beispielsweise nicht zu lange in das Licht der Energiequellen zu schauen oder in den Strahlengang zu fassen. Zudem sind weiße Leuchtdioden erheblich kostengünstiger und haben eine kompakte Bauform.

Unter einer weißen Leuchtdiode wird insbesondere eine solche Leuchtdiode verstanden, die zum Erzeugen weißen Lichtes eine blaue Leuchtdiode sowie einen die blaue Leuchtdiode bedeckenden Lumineszenzfarbstoff aufweist. Alternativ zu einer blauen Leuchtdiode kann eine ultraviolette (UV) Leuchtdiode eingesetzt werden. Insbesondere basiert das Prinzip einer weißen Leuchtdiode darauf, dass blaue Photonen teilweise phosphor-konvertiert werden und sich die blauen Photonen mit den phosphor-konvertierten, gelben Photonen zu weißem Licht mischen. Alternativ könnte auch das Licht von roten, grünen und blauen Leuchtdioden, als sogenannte RGB-LEDs, oder ein ultraviolette-LED (UV-LED) mit mehreren verschiedenen Leuchtstoffen in rot, grün und blau gemischt werden.

Unter einer blauen Leuchtdiode wird insbesondere eine solche Leuchtdiode verstanden, die elektromagnetische Energie/Licht mit einer Wellenlänge von 450 bis 500 nm ausstrahlt/aussendet. Das heißt, dass die blaue Leuchtdiode ein Halbleitermaterial, wie etwa Gallium-Nitrid (GaN), Indiumgalliumnitrid (InGaN) und/oder Aluminium-Gallium-Nitrid, (AlGaN) enthält, durch das Elektronen in blaue Photonen umgewandelt werden.

Unter einem Lumineszenzfarbstoff wird insbesondere ein photolumineszierendes Material verstanden, das blaues Licht in längerwelliges und/oder breitbandigeres Licht umwandelt. Das heißt, dass der Lumineszenzfarbstoff, wie etwa Yttrium-Aluminium-Granat (YAG), vorzugsweise mit Cer dotiertes Yttrium-Aluminium-Granat (YAG:Ce), einen Teil der blauen Photonen phosphor-konvertiert bzw. in gelbe Photonen umwandelt.

Gemäß einer bevorzugten Ausführungsform kann die Heizeinrichtung ein Energiemodul, das durch die Energiequelle oder eine Vielzahl der Energiequellen gebildet ist, aufweisen. So kann eine geeignete Leistung erzielt werden. Vorzugsweise können die Energiequellen, die das Energiemodul bilden, benachbart angeordnet sein, insbesondere im Wesentlichen mit gleichen Abständen. Insbesondere kann das Energiemodul (genau oder mehr als) drei Energiequellen aufweisen. Die drei Energiequellen können im Wesentlichen an den Ecken eines gleichseitigen Dreiecks angeordnet sein. Alternativ kann das Energiemodul nur eine Energiequelle, genau oder mehr als zwei Energiequellen, genau oder mehr als vier Energiequellen aufweisen.

Gemäß einer Weiterbildung kann die Heizeinrichtung eine Vielzahl der Energiemodule aufweisen. So kann eine geeignete Leistung erzielt werden.

Gemäß einer bevorzugten Ausführungsform kann die Kühlvorrichtung einen an der Energiequelle/dem Energiemodul (bzw. den Energiequellen/den Energiemodulen) vorbeiführenden Kühlkanal oder eine Vielzahl der Kühlkanäle aufweisen. Insbesondere dient der Kühlkanal zum Führen eines Kühlfluids. So kann Wärme in geeigneter Weise abgeführt werden. Das Kühlfluid kann beispielsweise Wasser oder Öl enthalten. Alternativ könnte auch (flüssiger) Stickstoff verwendet werden. Zudem kann das Kühlfluid ein Kühlerfrostschutzmittel, beispielsweise basierend auf Ethylenglycol, aufweisen. So kann eine Korrosion verringert werden. Beispielsweise kann das Kühlfluid zu einem 60 bis 90 % aus Wasser bestehen und zu 10 bis 40 % aus dem Kühlerfrostschutzmittel bestehen. Vorzugsweise kann der Kühlkanal in dem Träger ausgebildet sein.

Gemäß einer Weiterbildung kann der Kühlkanal sich im Wesentlichen entlang der Umfangsrichtung erstrecken. Das heißt, dass der Kühlkanal eine (nahezu vollständig geschlossene) Ringform im Längsschnitt hat. Insbesondere kann sich der Kühlkanal um eine zentrale Öffnung der Heizvorrichtung bzw. des Trägers herum erstrecken. So wird eine effiziente Kühlfluidführung gewährleistet.

Gemäß einer Weiterbildung kann der Kühlkanal innenliegend verrippt sein. Das heißt, dass der Kühlkanal (Axial-)Rippen aufweist, die sich in das Innere des Kühlkanals erstrecken. Durch die Rippen wird eine Kontaktoberfläche des Kühlfluids zu einer Kühlkanalwandung vergrößert, um einen Wärmeübergang zu verbessern. Zudem kann eine Stabilität des Kühlkanals durch die axiale Abstützung durch die Rippen erhöht werden. Vorzugsweise können die Rippen sich entlang einer Umfangsrichtung der Heizvorrichtung, insbesondere des Trägers, erstrecken, so dass der Kühlkanal mehrere radial durch die Rippen voneinander getrennte Kühlkanalbereiche aufweist. Insbesondere kann der Kühlkanal entlang seiner Erstreckung (nur) abschnittsweise verrippt ausgebildet sein. Das heißt, dass der Kühlkanal in Umfangsrichtung abwechselnde Bereiche mit Rippen und ohne Rippen haben kann. Vorzugsweise können die Bereiche mit Rippen in Strömungsrichtung des Kühlfluids jeweils (direkt) hinter einem der Energiemodule ausgebildet sein. So kann die Wärme der Energiemodule über die verrippten Bereiche besonders effizient abgeführt werden und über die nicht-verrippten Bereiche eine Durchmischung des Kühlfluids und eine homogene Temperaturverteilung sichergestellt werden.

Gemäß einer Weiterbildung kann der Kühlkanal eine Kühlkanalwandung aufweisen, dessen Innenoberfläche angeraut ist. Die Rauheit kann insbesondere fertigungstechnisch durch 3D-Drucken des Trägers erzeugt werden. So können zusätzliche Verwirbelungen erzeugt werden, die sich vorteilhaft auf die Kühlleistung auswirken.

Gemäß einer bevorzugten Ausführungsform kann die Kühlvorrichtung einen mit einem Kühleinlass des Kühlkanals verbundenen Eingangsanschluss und einen mit einem Kühlauslass des Kühlkanals verbundenen Ausgangsanschluss aufweisen. So kann das Kühlfluid zugeführt und abgeführt werden. Vorzugsweise kann sich der Eingangsanschluss und/oder der Ausgangsanschluss an der Heizvorrichtung bzw. an dem Träger in Axialrichtung, vorzugsweise zu einer Oberseite, erstrecken. So kann eine bauraumsparende Lösung implementiert werden. Alternativ kann sich der Eingangsanschluss und/oder der Ausgangsanschluss an der Heizvorrichtung bzw. an dem Träger in Radialrichtung, beispielsweise nach außen, erstrecken.

Gemäß einer bevorzugten Ausführungsform kann die Kühlvorrichtung einen dem Kühlkanal vorgeschalteten Vorlaufkühler zum Vorkühlen des Kühlfluids aufweisen. Durch das Absenken der Temperatur des Kühlfluids kann eine Kühlleistung weiter verbessert werden.

Gemäß einer Weiterbildung können die Energiemodule über einen (vorzugsweise gesamten) Umfang der Heizvorrichtung, insbesondere des Trägers, verteilt angeordnet sein. Das heißt, dass die Energiemodule vorzugsweise ringförmig angeordnet sind. Die Energiemodule können im Wesentlichen gleichverteilt angeordnet sein. Dies hat den Vorteil, dass durch eine entsprechende Ansteuerung der Energiemodule an jedem Umfangsbereich um den Extruder herum Energie eingebracht werden kann, ohne dass die Heizvorrichtung beispielsweise gedreht werden muss.

Gemäß einer bevorzugten Ausführungsform können jeweils zwei in Umfangsrichtung benachbarte Energiemodule so angeordnet sein, dass sich ein Energiespot der Energiemodule überlappt. Das heißt, dass die Energiemodule so angeordnet sind, dass sie Energie in den zumindest teilweise gleichen (Öberfiächen-)Bereich der durch Extrusion ausgebrachten Materialschicht einbringen.

Unter einem Energiespot wird dabei eine solche Kegelschnittfläche, insbesondere eine im Wesentlichen kreisförmige oder elliptische Fläche, verstanden, die (beispielsweise im Zentrum) eine maximale Intensität bzw. Energiedichte hat und an deren Außenumfang/Durchmesser noch, d.h. mindestens eine Hälfte der maximalen Intensität bzw. Energiedichte vorliegt. Das heißt, dass der Energiespot eine Schnittfläche eines Energiekegels des bzw. jedes Energiemoduls ist, wobei eine Mantelfläche des Energiekegels durch die radiale Intensitätsabnahme um die Hälfte des Intensitätsmaximums definiert ist.

Gemäß einer bevorzugten Ausführungsform können die Energiemodule jeweils eine optische Achse haben, die zu einer zentralen Achse der Heizvorrichtung, insbesondere des Trägers geneigt ist. Insbesondere können die optischen Achsen von der Unterseite des Trägers aus nach radial innen angestellt sein. Ein Anstellungswinkel kann beispielsweise mindestens 5°, 10°, 15°, 20° oder 25° und/oder maximal 30°, 40°, 50° oder 60° betragen. Dies hat den Vorteil, dass bestimmte Bereiche der ausgebrachten Materialschicht erhitzt werden. Je kompakter die Heizvorrichtung aufgebaut ist, desto kleiner kann die Anstellung der Energiemodule sein.

Gemäß einer bevorzugten Ausführungsform kann die Heizvorrichtung eine Stromversorgung für das Energiemodul oder die Energiemodule aufweisen. Vorzugsweise kann die Stromversorgung eine Stromquelle/Spannungsquelle oder eine Vielzahl der Stromquellen/Spannungsquellen aufweisen. Insbesondere kann die Stromquelle eingerichtet sein, eine maximale Leistung von bis zu 200 W, 400 W, 500 W, 600 W, 700 W, 800 W, 900 W oder 1000 W auszugeben. Die Stromversorgung kann beispielsweise drei der Stromquellen haben. Entsprechend kann eine maximale Leistung von bis zu 600 W, 1200 W, 1500 W, 1800 W, 2100 W, 2400 W, 2700 W oder 3000 W erreicht werden kann. Dabei kann die Stromquelle beispielsweise eine (maximale) Stromstärke von bis zu 3,6 A, 5 A, 7,2 A, 10A oder 12,5 A bzw. eine (maximale) Spannung von bis zu 12 V, 24 V oder 48 V haben kann.

Gemäß einer bevorzugten Ausführungsform kann die Stromquelle eine Konstantstromquelle bzw. die Spannungsquelle eine Konstantspannungsquelle sein. So können Schwankungen ausgeglichen und eine konstante Eingangsstromstärke bzw. eine konstante Eingangsspannung für das Energiemodul oder die Energiemodule sichergestellt werden. Insbesondere kann die Konstantstromquelle und/oder die Konstantspannungsquelle ortsfest und/oder separat zu dem Träger bzw. zu der Extrudervorrichtung angeordnet sein.

Gemäß einer bevorzugten Ausführungsform kann die Stromversorgung eine zentrale Stromverteileinheit und eine Vielzahl von Stromleitungen aufweisen. Dabei können die Stromleitungen jeweils die Stromverteileinheit mit den Energiemodulen bzw. Energiequellen verbinden. Die Stromverteileinheit kann insbesondere an dem Träger angebracht sein. Die Stromverteileinheit kann auch als ein PowerBoard bezeichnet werden. Die Stromverteileinheit ist (eingangsseitig) insbesondere mit der Konstantstromquelle und/oder der Konstantspannungsquelle verbunden. Die Stromverteileinheit ist (ausgangsseitig) insbesondere über die Stromleitungen mit den Energiemodulen bzw. Energiequellen verbunden. So kann eine kompakte Stromversorgung realisiert werden.

Gemäß einer bevorzugten Ausführungsform kann die Heizvorrichtung eine Steuereinheit zur Steuerung der Stromversorgung aufweisen.

Gemäß einer Weiterbildung kann die Steuereinheit eingerichtet sein, die Energiemodule unabhängig voneinander mit Energie zu versorgen. Vorzugsweise kann die Steuereinheit eingerichtet sein, nur einen Teil (d.h. nicht alle) der Energiemodule gleichzeitig mit Energie zu versorgen und/oder die mit Energie versorgten Energiemodule unterschiedlich zu versorgen. Insbesondere kann die Steuereinheit eingerichtet sein, in Umfangsrichtung benachbarte, beispielsweise (nur/genau) zwei oder drei, Energiemodule gleichzeitig mit Energie zu versorgen. So kann die erforderliche Leistung verringert werden.

Gemäß einer Weiterbildung kann die Steuereinheit eingerichtet sein, in Abhängigkeit einer Bewegungsrichtung des Trägers bzw. einer Druckrichtung des Extruders die Energiemodule mit Energie zu versorgen, insbesondere nur die in der Bewegungsrichtung vorne bzw. in Druckrichtung vor dem Extruder liegenden Energiemodule mit Energie zu versorgen. So kann gewährleistet werden, dass (nur bzw. vor allem) bestimmte Bereiche der ausgebrachten Materialschicht erhitzt werden.

Gemäß einer Weiterbildung kann die Steuereinheit eingerichtet sein, eine maximale Leistung von mindestens 1 W bis 1000 W, insbesondere von mindestens 40 W bis 800 W, bevorzugt von mindestens 100 W bis 700 W, an dem bzw. jedem Energiemodul anzulegen. Das heißt, dass die Energiemodule mit einer höheren Leistung als für Leuchtdioden üblich versorgt werden. So kann eine ausreichende Erwärmung der ausgebrachten Materialschicht erwirkt werden.

Gemäß einer Weiterbildung kann die Steuereinheit eingerichtet sein, eine (maximale) Leistung, die größer als eine Nennleistung der weißen Leuchtdiode ist, insbesondere größer als 150 %, 200 %, 250 %, 300 %, 350 %, 400 %, 450 % oder 500 % der Nennleistung der weißen Leuchtdiode ist an dem bzw. jedem Energiemodul anzulegen. Das heißt, dass die Energiemodule mit einer höheren Leistung als für Leuchtdioden üblich versorgt werden. Dies wird insbesondere durch die Kühlung der weißen Leuchtdiode ermöglicht.

Gemäß einer Weiterbildung kann die Steuereinheit eingerichtet sein, mindestens eine solche Leistung an dem bzw. jedem Energiemodul anzulegen, dass durch die eingebrachte Energie des Energiemoduls bzw. der Energiemodule eine lokale Erwärmung der ausgebrachten Materialschicht um mindestens 5 K, 8 K, 10 K, 12 K, 15 K, 30 K, 50 K, 100 K, 150 K, 200 K, 250 K, 300 K, 350 K oder 400 K erfolgt. Die (konkret erforderliche) Leistung variiert dabei abhängig von materialbedingten Einflussfaktoren, wie von einer Wärmekapazität des Materials der ausgebrachten Materialschicht, von einer Wärmeleitfähigkeit des Materials der ausgebrachten Materialschicht und/oder eines Untergrunds, auf dem die Materialschicht(en) ausgebracht wurde(n), von einer Farbe bzw. eines (farbbedingten) Absorptionsgrads des Materials der ausgebrachten Materialschicht, von einer Eindringtiefe des Lichts der Energiequelle(n) in das Material der ausgebrachten Materialschicht, sowie im Fall von teilkristallinen Kunststoffen als Material der ausgebrachten Materialschicht von einer Schmelzenthalpie und von einem Kristallanteil des Materials der ausgebrachten Materialschicht. Zudem variiert die (konkret erforderliche) Leistung dabei abhängig von energiequellenbedingten Einflussfaktoren, wie von einem Wirkungsgrad bzw. einer Effizienz/Lichtausbeute der eingesetzten weißen Leuchtdiode(n) sowie von einer Größe einer durch die Energiequelle bestrahlten Fläche. Weiter variiert die (konkret erforderliche) Leistung dabei abhängig von prozess-/materialextrusionsbedingten Einflussfaktoren, wie einer Druckgeschwindigkeit des Extruders. Zusätzlich variiert die (konkret erforderliche) Leistung dabei abhängig von umgebungsbedingten Einflussfaktoren, wie von Umgebungsverlusten durch Konvektion und Strahlung, die wiederum vor allem durch eine Lufttemperatur und eine Luftströmung der Umgebung bedingt sind.

Insbesondere kann die Leistung bei einer Druckgeschwindigkeit des Extruders bzw. Bewegungsgeschwindigkeit des Trägers von mindestens 5 mm/s, 10 mm/s, 15 mm/s, 20 mm/s, 35 mm/s, 50 mm/s, 75 mm/s, 100 mm/s, 150 mm/s oder 200 mm/s vorliegen. So kann sichergestellt werden, dass der Extruder ausreichend zeitnah nach Erwärmen der ausgebrachten Materialschicht die nächste/auszubringende Materialschicht auf ebenjenen erwärmten Bereich der ausgebrachten Materialschicht ausbringt. Somit wird sichergestellt, dass zwischen dem Erwärmen und dem Ausbringen der neuen Materialschicht keine zu große Abkühlung erfolgt.

Gemäß einer Ausführungsform kann die (bzw. jede) Energiequelle eine Vielzahl von Emitterflächen, beispielsweise (genau oder mehr als) zwei, drei oder vier Emitterflächen, insbesondere gleich großen Emitterflächen, aufweisen. Die Emitterflächen können vorzugsweise direkt benachbart angeordnet sein. Beispielsweise können vier Emitterflächen in quadratischer Anordnung ausgebildet sein.

Gemäß einer bevorzugten Ausführungsform können die bzw. alle Emitterflächen (innerhalb) der/jeder Energiequelle in Serie geschaltet sein. Dies hat den Vorteil, dass eine besonders konstante Stromversorgung (innerhalb der Energiequelle) gewährleistet wird. Alternativ könnten beispielsweise jeweils zwei der Emitterflächen in Serie geschaltet sein und zu den jeweils anderen zwei der Emitterflächen parallelgeschaltet sein.

Gemäß einer bevorzugten Ausführungsform können die bzw. alle Energiequellen (innerhalb) des/jedes Energiemoduls in Serie geschaltet sein. Dies hat den Vorteil, dass eine besonders konstante Stromversorgung (innerhalb des Energiemoduls) gewährleistet wird.

Gemäß einer bevorzugten Ausführungsform kann die Heizvorrichtung eine Platine oder eine Vielzahl der Platinen aufweisen. An der bzw. jeder Platine ist insbesondere jeweils eines der Energiemodule angebunden. Das heißt, dass mehrere Energiequellen auf einer Platine zusammengefasst sein können. So wird eine effiziente elektrische Anbindung sichergestellt.

Gemäß einer bevorzugten Ausführungsform kann die bzw. jede Platine durch eine Leiterplatine mit einem Metallsubstrat gebildet sein. Insbesondere kann das Metallsubstrat ein Kupfersubstrat oder ein Aluminiumsubstrat sein. So kann eine geeignete Wärmeleitung ermöglicht werden.

Gemäß einer bevorzugten Ausführungsform kann die bzw. jede Energiequelle ein oberflächenmontiertes Bauelement (Surface Mounted Device, SMD) sein. Das heißt, dass die bzw. jede Energiequelle eine lötfähige Anschlussfläche aufweist, um (direkt) auf die Platine gelötet zu werden. So kann eine besonders bauraumsparende Lösung bereitgestellt werden.

Gemäß einer bevorzugten Ausführungsform kann die bzw. jede Energiequelle eine Metallfläche haben. Die Metallfläche kann insbesondere eine Kupferfläche sein. Vorzugsweise kann die Metallfläche elektrisch von den elektrischen Anschlüssen der Energiequelle isoliert sein. Insbesondere kann die bzw. jede Energiequelle direkt mit der Platine (an ihrer Oberseite), insbesondere dem Metallsubstrat der Platine, verlötet sein. So kann Wärme direkt in die Platine geleitet werden.

Gemäß einer bevorzugten Ausführungsform kann die Heizvorrichtung eine zentrale Wärmesenke für die Energiequelle(n) aufweisen. Die zentrale Wärmesenke kann vorzugsweise ein metallischer, beispielsweise aus Aluminium oder Kupfer aufgebauter Kühlkörper sein. Dies ermöglicht eine effiziente Wärmeabführung, die verhältnismäßig kostengünstig ist. Auch Materialien wie Gold, Silber, Platin, Graphit oder Diamant sind möglich.

Gemäß einer Weiterbildung kann die zentrale Wärmesenke durch den Träger gebildet sein. Vorzugsweise kann die bzw. jede Platine (an ihrer Unterseite) fest mit dem Träger verbunden sein. Insbesondere kann die bzw. jede Platine über eine Wärmeleitpaste, ein Flüssigmetall oder ein Lot (insbesondere mit hoher thermischer Leitfähigkeit) mit dem Träger verbunden sein. Vorzugsweise kann die bzw. jede Platine an der Unterseite des Trägers angeordnet sein. Vorzugsweise kann ein Oberflächenbereich des Trägers, an dem die bzw. jede Platine angebracht ist, bearbeitet sein, insbesondere gefräst sein. Dies stellt eine möglichst glatte Oberfläche für eine gute Verbindung und Wärmeleitung zwischen der Platine und dem Träger sicher. So wird ein Wärmeübergang maximiert.

Gemäß einer Ausführungsform kann die bzw. jede Platine eine um ein Vielfaches, beispielsweise um ein mindestens 5-, 10-, oder 20-faches, größere Oberfläche als die daran angebundene(n) Energiequelle(n) (bzw. Emitterflächen) insgesamt aufweisen. Dies hat den Vorteil, dass die Wärme der Energiequelle(n) über die größere Fläche der Platine in die Wärmesenke übertragen werden kann.

Gemäß einer Ausführungsform kann die bzw. jede Platine Elektroden zum Anschluss einer zugeordneten Stromleitung für die Stromversorgung der an der jeweiligen Platine angebundenen Energiequelle(n) aufweisen. Insbesondere können die Elektroden von dem Metallsubstrat isoliert sein. So wird eine geeignete elektrische Anbindung sichergestellt.

Gemäß einer bevorzugten Ausführungsform kann eine Zuführung der Stromleitungen zu der bzw. jeder Platine radial außenseitig und/oder radial innenseitig erfolgen. Beispielsweise können alle Stromleitungen von radial außen zugeführt sein oder von radial innen zugeführt sein oder teilweise von radial außen und teilweise von radial innen zugeführt sein. Dies ermöglicht eine optimierte Bauraumnutzung.

Gemäß einer Ausführungsform kann die bzw. jede Platine im Wesentlichen die Form eines (gleichseitigen) Dreiecks haben. Dabei kann eine Dreiecksspitze radial nach innen oder radial nach außen weisen. Beispielsweise können die Platinen in Umfangsrichtung abwechselnd mit radial nach außen und nach innen weisender Dreiecksspitze angeordnet sein oder alle Platinen mit radial nach innen weisender Dreiecksspitze angeordnet sein. Beispielsweise kann eine jeweilige Stromleitung in Radialrichtung gegenüberliegend zu der Dreiecksspitze der Platine zugeführt sein. Das heißt, dass bei einer nach außen weisenden Dreiecksspitze die Zuführung von radial innen erfolgt und bei einer nach innen weisenden Dreiecksspitze die Zuführung von radial außen erfolgt. So kann eine geeignete, bauraumsparende Anordnung ermöglicht werden. Alternativ sind auch andere Formen, wie etwa rechteckig, quadratisch oder polygon, denkbar.

Gemäß einem weiteren Aspekt der vorliegenden Offenbarung, der in Kombination und ggf. unabhängig von dem Vorliegen der Kühlvorrichtung für die Energiequelle beanspruchbar ist, kann die Heizvorrichtung einen (Temperatur-)Sensor, insbesondere in Form eines Infrarot-Sensors, vorzugsweise eines Infrarotkamerasensors oder eines Pyrometers, aufweisen. Dabei ist der Sensor eingerichtet, eine (Öberflächen-)Temperatur der ausgebrachten Materialschicht zu erfassen. Vorzugsweise kann der Sensor (fest) an dem Träger angebracht sein. Beispielsweise kann der Sensor an dem Träger radial weiter außen oder radial weiter innen als die Energiequelle(n) angeordnet sein. Alternativ könnte der Temperatursensor auch innerhalb eines Energiemoduls bzw. innerhalb der Optik angeordnet sein. Das heißt, dass der Temperatursensor im Wesentlichen koaxial zu einem der Energiemodule angeordnet ist. So ist eine besonders bauraumsparende Anordnung sowie eine direkte Ausrichtung des Sensors auf den durch das betreffende Energiemodul zu erwärmenden Bereich möglich.

Demnach betrifft die vorliegende Offenbarung auch eine Heizvorrichtung zum Erwärmen einer durch Extrusion ausgebrachten Materialschicht, wobei die Heizvorrichtung einen Träger, der eingerichtet sich, sich mit einer Bewegung eines Extruders einer Extrusionsvorrichtung mitzubewegen, eine elektromagnetische Energiequelle, die eine weiße Leuchtdiode (LED) aufweist, sowie einen Sensor, der eingerichtet ist, eine (Oberflächen-)Temperatur der ausgebrachten Materialschicht zu erfassen, aufweist.

Gemäß einer bevorzugten Ausführungsform kann die Steuereinheit eingerichtet sein, die Energiequelle(n) in Abhängigkeit der (Oberflächen-)Temperatur der ausgebrachten Materialschicht zu steuern. Das heißt, dass eine Leistung der Energiequelle(n) an die erfasste Temperatur angepasst wird. Insbesondere wird die Leistung derart angepasst, dass die Temperatur auf einen vorbestimmten Temperaturbereich gesteuert wird. Dies ermöglicht eine Verbesserung des Materialschichtzusammenhalts zwischen der (zuletzt) ausgebrachten und der (als nächstes) auszubringenden Materialschicht.

Gemäß einer bevorzugten Ausführungsform kann die Heizvorrichtung eine Vielzahl der Sensoren aufweisen, die über einen Umfang des Trägers verteilt angeordnet sind. Dies hat den Vorteil, dass in jedem Umfangsbereich der ausgebrachten Materialschicht die Temperatur erfasst werden kann, ohne dass die Sensoren drehbar oder dergleichen angebracht sein müssen.

Gemäß einem weiteren Aspekt der vorliegenden Offenbarung, der in Kombination und ggf. unabhängig von dem Vorliegen der Kühlvorrichtung für die Energiequelle beanspruchbar ist, kann die Heizvorrichtung eine Optik zum Bündeln der elektromagnetischen Energie der Energiequelle aufweisen. Das heißt, dass die Optik im Strahlengang der Energiequelle bzw. zwischen der Energiequelle und der Materialschicht angeordnet ist. Durch das Bündeln der Energie kann die Heizleistung der bzw. jeder einzelnen Leuchtdiode erhöht werden.

Demnach betrifft die vorliegende Offenbarung auch eine Heizvorrichtung zum Erwärmen einer durch Extrusion ausgebrachten Materialschicht, wobei die Heizvorrichtung einen Träger, der eingerichtet sich, sich mit einer Bewegung eines Extruders einer Extrusionsvorrichtung mitzubewegen, eine elektromagnetische Energiequelle, die eine weiße Leuchtdiode (LED) aufweist, sowie eine Optik zum Bündeln der elektromagnetischen Energie der Energiequelle aufweist.

Gemäß einer bevorzugten Ausführungsform kann die Optik einen Kollimator zur Parallelisierung der elektromagnetischen Energie aufweisen. Der Einsatz eines Kollimators kann fertigungstechnisch verhältnismäßig einfach umgesetzt werden. Vorzugsweise kann der Kollimator der Energiequelle im Strahlengang direkt nachgeschaltet sein bzw. direkt an der Oberseite der Leuchtdiode angeordnet sein. Alternativ kann statt dem Kollimator ein Reflektorspiegel eingesetzt werden.

Gemäß einer bevorzugten Ausführungsform kann die Optik eine Sammellinse zur Bündelung der elektromagnetischen Energie aufweisen. Vorzugsweise kann die Sammellinse dem Kollimator nachgeschaltet sein. Das heißt, dass die Energie der Leuchtdiode zunächst den Kollimator durchstrahlt, dann die Sammellinse durchstrahlt, bevor sie die ausgebrachte Materialschicht erreicht. So kann eine geeignete Strahlenführung erreicht werden. Insbesondere kann die Sammellinse eine Fresnelsche Stufenlinse sein. Dies ermöglicht eine besonders kompakte Bauform. Alternativ ist auch eine Ausbildung der Sammellinse ohne Fresnelstufe möglich.

Gemäß einer bevorzugten Ausführungsform kann der Kollimator direkt in die Sammellinse übergehen. Das heißt, dass der Kollimator und die Sammellinse eine konstruktive Einheit bilden. Mit anderen Worten sind der Kollimator und die Sammellinse einstückig ausgebildet bzw. aus einem Guss hergestellt. Dies ermöglicht eine verhältnismäßig einfache Herstellung und eine kompakte Bauform der Optik.

Gemäß einer bevorzugten Ausführungsform kann die Heizvorrichtung eine Vielzahl der Optiken aufweisen. Vorzugsweise kann jeder Energiequelle eine Optik zugeordnet sein. Das heißt, dass die Energie aller Energiequellen gebündelt wird.

Gemäß einer bevorzugten Ausführungsform kann jeder Energiequelle ein einzelner Kollimator zugeordnet sein. Das heißt, dass die Energie aller Energiequellen zunächst jeweils einzeln parallelisiert werden. Gemäß einer bevorzugten Ausführungsform kann (jeweils) mehreren Energiequellen und/oder jedem Energiemodul eine gemeinsame Sammellinse zugeordnet sein. Das heißt, dass die (bereits parallelisierte) Energie aller Energiequellen in Gruppen, insbesondere je Energiemodul, gebündelt wird. So kann eine besonders kompakte Bauform der Optiken erreicht werden. Mit anderen Worten kann die bzw. jede Optik eine Clusteroptik sein, die so viele Kollimator wie Energiequellen und eine gemeinsame Sammellinse aufweist.

Gemäß einer bevorzugten Ausführungsform kann die bzw. jede Optik Pins zur Positionierung der Optik relativ zu dem Träger (und damit auch zu der am Träger befestigten Platine) aufweisen. Dies hat den Vorteil, dass eine gewünschte Ausrichtung sichergestellt werden kann.

Gemäß einer bevorzugten Ausführungsform kann die bzw. jede Optik Befestigungsöffnungen/laschen/ohren zur Befestigung an dem Träger aufweisen. So kann die Optik fest mit dem Träger verbunden werden, beispielsweise durch Verschrauben. So wird eine geeignete Befestigung sichergestellt.

Die vorliegende Offenbarung betrifft auch eine Extrusionsvorrichtung zur Extrusion eines Objekts. Die Extrusionsvorrichtung weist die offenbarungsgemäße Heizvorrichtung auf. Die Extrusionsvorrichtung weist einen Extruder auf, der ausgebildet ist, ein vorzugsweise strangförmiges Ausgangsmaterial auszubringen.

Gemäß einer bevorzugten Ausführungsform kann der Träger der Heizvorrichtung an dem Extruder (fest) angebracht sein. Das heißt, dass sich bei Bewegung des Extruders der Träger (und die daran angebrachte(n) Energiequelle(n)) mitbewegen. So kann sichergestellt werden, dass ein um den Extruder liegender Bereich der ausgebrachten Materialschicht durch die Energiequelle(n) aufgeheizt werden kann.

Gemäß einer Ausführungsform kann der Extruder ausgebildet sein, das Ausgangsmaterial aufzuschmelzen und zu plastifizieren. Dazu kann der Extruder eine Aufschmelzvorrichtung aufweisen. Mit anderen Worten ist die Heizvorrichtung (zum (Wieder-)Erwärmen einer bereits ausgebrachten Materialschicht) nicht mit der Aufschmelzvorrichtung des Extruders (zur (erstmaligen) Plastifizierung der auszubringenden Materialschicht) gleichzusetzen. Gemäß einer Ausführungsform kann der Extruder ausgebildet sein, das aufgeschmolzene und plastifizierte Ausgangsmaterial strangförmig auszubringen. Dazu kann der Extruder eine Düse aufweisen. So kann ein Extrusionsverfahren durchgeführt werden.

Gemäß einer Ausführungsform kann der Extruder einen Materialbehälter mit dem Ausgangsmaterial aufweisen. Vorzugsweise kann das Ausgangsmaterial aus einem Thermoplast aufgebaut sein. Ein Thermoplast ist zur Extrusion besonders geeignet.

Gemäß einer bevorzugten Ausführungsform kann das Ausgangsmaterial lichtabsorbierende Additive, insbesondere Kohlenstofffasern oder schwarze Pigmente, wie Ruß, enthalten. So wird der Wärmeeintrag in die bereits ausgebrachte Materialschicht durch die weiße Leuchtdiode erheblich verbessert.

Die vorliegende Offenbarung betrifft auch ein Verfahren zur (Material-)Extrusion eines Objekts. Zur Durchführung des Verfahrens wird die offenbarungsgemäße Extrusionsvorrichtung eingesetzt, die die offenbarungsgemäße Heizvorrichtung aufweist.

In dem Verfahren wird mit dem Extruder eine Materialschicht, insbesondere durch Materialextrusion (gemäß DIN EN ISO/ASTM 52900:2018-06) (auch als Fused Layer Modelling (gemäß VDI 3405) oder als Fused Filament Fabrication bezeichnet), ausgebracht, mit der Heizvorrichtung eine (zuletzt) ausgebrachte Materialschicht in einem bestimmten (vor dem Extruder liegenden) Bereich erwärmt, und danach mit dem Extruder eine weitere Materialschicht auf den bestimmten, durch die Heizvorrichtung erwärmten Bereich ausgebracht. Durch das Erwärmen des Bereichs der bereits ausgebrachten Materialschicht wird der Materialschichtzusammenhalt verbessert.

Gemäß einer bevorzugten Ausführungsform kann sich der Extruder und/oder der Träger der Heizvorrichtung mit einer Bewegungsgeschwindigkeit/Druckgeschwindigkeit von mindestens 5 mm/s, 10 mm/s, 15 mm/s, 20 mm/s, 35 mm/s, 50 mm/s, 75 mm/s, 100 mm/s, 150 mm/s oder 200 mm/s, bewegen. So kann sichergestellt werden, dass der Extruder ausreichend zeitnah nach Erwärmen der ausgebrachten Materialschicht die nächste/auszubringende Materialschicht auf ebenjenen erwärmten Bereich der ausgebrachten Materialschicht ausbringt. Somit wird sichergestellt, dass zwischen dem Erwärmen und dem Ausbringen der neuen Materialschicht keine zu große Abkühlung erfolgt.

Gemäß einer bevorzugten Ausführungsform kann bei dieser Bewegungsgeschwindigkeit eine solche Leistung an der Energiequelle bzw. den Energiequellen der Heizvorrichtung angelegt werden, dass der bestimmte (Öberflächen-)Bereich um mindestens 5 K, 8 K, 10 K, 12 K, 15 K, 30 K, 50 K, 100 K, 150 K, 200 K, 250 K, 300 K, 350 K oder 400 K erwärmt wird. So kann ein geeigneter Materialschichtzusammenhalt ermöglicht werden. Insbesondere kann eine Erwärmung um 10 K bei Prozessgeschwindigkeiten zwischen 10 und 100 mm/s realisiert werden.

Gemäß einer bevorzugten Ausführungsform kann vor dem Erwärmen des bestimmten Bereichs eine (Oberflächen-)Temperatur, insbesondere durch den Temperatursensor, erfasst werden. Vorzugsweise wird die Materialschicht bei dem Erwärmen so weit erwärmt, dass die (Oberflächen-)Temperatur in einen vorbestimmten Temperaturbereich gebracht wird.

Gemäß einer bevorzugten Ausführungsform kann die Materialschicht aus einem Thermoplast aufgebaut sein und lichtabsorbierende Additive enthalten. So wird der Wärmeeintrag erheblich verbessert.

### Kurzbeschreibung der Figuren

Fig. 1 eine schematische Darstellung eines Grundaufbaus einer offenbarungsgemäßen Extrusionsvorrichtung bzw. einer offenbarungsgemäßen Heizungsvorrichtung,
Fign. 2 bis 4 sind perspektivische Darstellungen der Heizvorrichtung,
Fign. 5 und 6 sind perspektivische Darstellungen eines Trägers der Heizvorrichtung,
Fig. 7 ist eine perspektivische Darstellung einer Platine und daran angebundener Energiequellen der Heizvorrichtung,
Fig. 8 ist eine perspektivische Darstellung der Platine,
Fign. 9 bis 12 sind verschiedene Ansichten einer Optik der Heizvorrichtung, und
Fig. 13 ist eine schematische Darstellung eines offenbarungsgemäßen Verfahrens.

Nachstehend werden bevorzugte Ausführungsformen der vorliegenden Offenbarung auf der Basis der zugehörigen Figuren beschrieben.

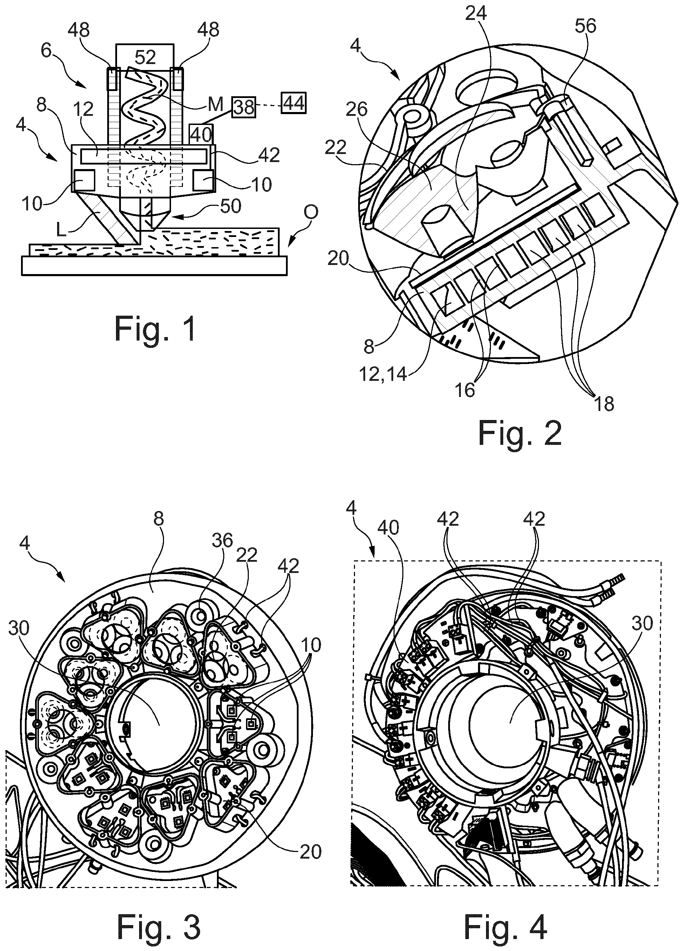

Fig. 1 ist eine schematische Darstellung eines Grundaufbaus einer offenbarungsgemäßen Extrusionsvorrichtung 2 bzw. einer offenbarungsgemäßen Heizvorrichtung 4. Die Extrusionsvorrichtung 2 dient zur Extrusion eines Objekts O.

Die Extrusionsvorrichtung 2 weist die Heizvorrichtung 4 und einen Extruder 6 auf. Der Extruder 6 ist ausgebildet, ein vorzugsweise strangförmiges Ausgangsmaterial (im Folgenden lediglich als Material M bezeichnet) auszubringen. Das heißt, dass die offenbarungsgemäße Heizvorrichtung 4 ein Bestandteil der Extrusionsvorrichtung 2 sein kann. Der Extruder 6 dient zum Extrudieren/Ablegen des Materials M in Schichten. In Fig. 1 ist dargestellt, dass eine erste Materialschicht bereits ausgebracht ist und eine zweite Materialschicht auf die erste Materialschicht ausgebracht wird bzw. auszubringen ist. Die Heizvorrichtung 4 dient zum Einbringen von Energie bzw. Wärme in eine Materialschicht, die bereits extrudiert/abgelegt worden ist, d.h. in diesem Fall in die erste Materialschicht.

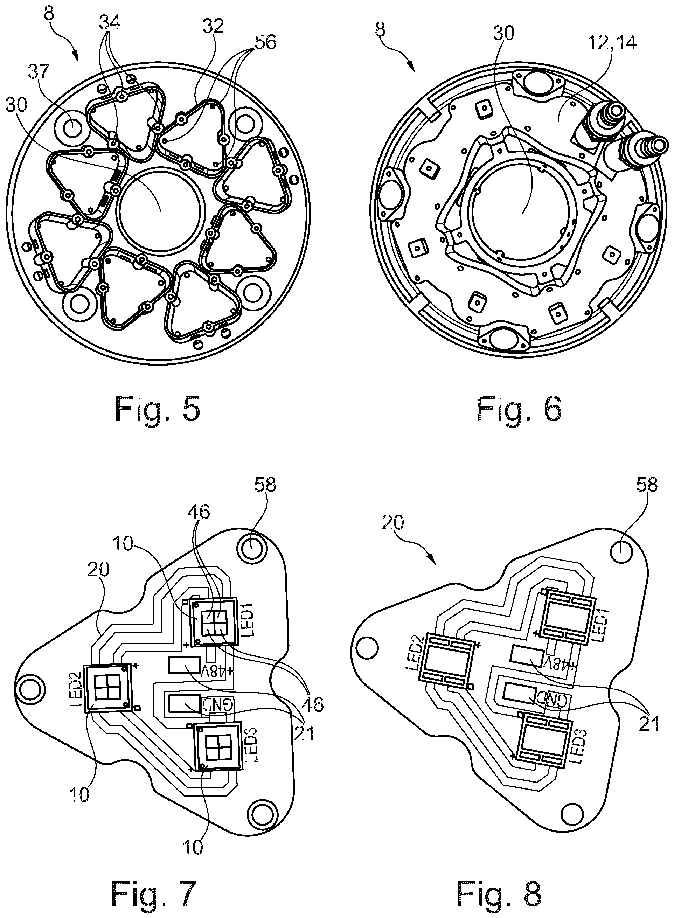

Die Heizvorrichtung 4 weist einen Träger 8 auf. Der Träger 8 ist eingerichtet, sich mit einer Bewegung des Extruders 6 mitzubewegen. Der Träger 8 kann insbesondere fest an dem Extruder 6 anbringbar oder angebracht sein, d.h. fest mit der Bewegung des Extruders 6 gekoppelt sein. Alternativ kann der Träger 8 eigenständig bewegbar sein, beispielsweise über einen Roboterarm oder dergleichen. In diesem Fall erfolgt eine Bewegungssteuerung des Trägers 8 vorzugsweise abhängig von der Bewegung des Extruders 6. Der Träger 8 ist insbesondere auch in Fign. 5 und 6 dargestellt.

Die Heizvorrichtung 4 weist eine elektromagnetische Energiequelle 10 bzw. ein Energiemodul mit einer oder mehreren Energiequellen 10 auf. Die Energiequelle 10 ist eingerichtet, elektromagnetische Energie, insbesondere in Form eines Lichtstrahls L, in die ausgebrachte Materialschicht, d.h. hier die erste Materialschicht, einzubringen. Die Energiequelle 10 ist vorzugsweise an dem Träger 8 (fest) angebracht. Die Energiequelle 10 kann insbesondere an einer Unterseite des Trägers 8 angeordnet sein. Das heißt, dass die Energiequelle 10 insbesondere zu dem Objekt bzw. der bereits ausgebrachten Materialschicht zugewandt/orientiert ist.

Die elektromagnetische Energiequelle 10 ist eine weiße Leuchtdiode. Insbesondere weist die weiße Leuchtdiode zum Erzeugen weißen Lichtes eine blaue Leuchtdiode sowie einen die blaue Leuchtdiode bedeckenden Lumineszenzfarbstoff auf.

Die Heizvorrichtung 4 kann vorzugsweise eine Kühlvorrichtung 12 zum Kühlen der Energiequelle 10 bzw. der weißen Leuchtdiode aufweisen. Die Kühlvorrichtung 12 ist vorzugsweise an dem Träger 8 (fest) angebracht bzw. durch den Träger 8 selbst ausgebildet.

Fign. 2 bis 4 zeigen perspektivische Darstellungen der offenbarungsgemäßen Heizvorrichtung 4. Dabei ist in Fig. 2 eine Schnittdarstellung durch einen Teil der Heizvorrichtung 4 dargestellt, in Fig. 3 eine Ansicht von unten dargestellt, und in Fig. 4 eine Ansicht von oben dargestellt.

Eine Wärmeableitung der Energiequelle(n) 10 durch die Kühlvorrichtung 12 wird insbesondere in Bezug auf Fig. 2 beschrieben. Die Kühlvorrichtung 12 ist eine Fluidkühlung. Das heißt, dass die Kühlvorrichtung 12 einen sich an der Energiequelle 10, insbesondere direkt an einer Unterseite der Energiequelle 10, vorbei/entlang erstreckenden, kühlfluidführenden Kühlkanal 14 aufweist. Insbesondere kann der Kühlkanal 14 axial (direkt) benachbart zu der Energiequelle 10 angeordnet sein.

Der Kühlkanal 14 kann vorzugsweise direkt in dem Träger 8 ausgebildet sein. Der Träger 8 dient als zentrale Wärmesenke für die Energiequelle(n) 10. Das heißt, dass Wärme der Energiequelle 10 über den Träger 8 an das darin strömende Kühlfluid geleitet wird. Der Träger 8 ist vorzugsweise metallisch, insbesondere aus Aluminium gefertigt. Der Träger 8 kann einen Kühlkanaleingang und einen Kühlkanalausgang aufweisen, durch die das Kühlfluid in den Träger 8 eingeleitet bzw. ausgeleitet werden kann. Der Kühlkanaleingang und der Kühlkanalausgang können beispielsweise radial nach außen ausgerichtet sein (vgl. Fig. 4) oder axial von der Oberseite des Trägers 8 abstehend ausgerichtet sein (vgl. Fig. 6).

Insbesondere kann sich der Kühlkanal 14 im Wesentlichen entlang eines Umfangs des Trägers 8 erstrecken. Ein Verlauf des Kühlkanals 14 ist insbesondere in Fig. 6 zu erkennen. Das heißt, dass der Kühlkanal 14 beispielsweise (im Längsschnitt) ringförmig ausgebildet sein kann. Der Kühlkanal 14 kann vorzugsweise durch 3D-Druck des Trägers 8 hergestellt sein. Vorzugsweise kann der Kühlkanal 14 innenliegende Rippen 16 aufweisen. Die Rippen 16 verbinden axiale Begrenzungsflächen des Kühlkanals 14 miteinander. Die Rippen 16 können den Kühlkanal 14 abschnittsweise in einzelne Kühlkanalabschnitte 18 unterteilen. In der dargestellten Ausführungsform erstrecken sich die Kühlkanalabschnitte 18 entsprechend radial zueinander versetzt bzw. entlang des Umfangs/der Umfangsrichtung des Trägers 8.

Die Heizvorrichtung 4 weist eine Platine 20 auf. Die Platine 20 dient zur elektrischen Anbindung/Steuerung der Energiequelle 10. An jeder Platine 20 kann insbesondere ein Energiemodul mit mehreren Energiequellen 10, in der dargestellten Ausführungsform mit genau drei Energiequellen 10, angebunden sein. Die Platine 20 ist insbesondere auch in Fign. 7 und 8 dargestellt, wobei in Fig. 7 die drei Energiequellen/ Leuchtdioden 10 angelötet sind und in Fig. 8 die Energiequellen/Leuchtdioden 10 noch nicht angelötet sind. In Fig. 8 sind die platinenseitigen Anschlussflächen für die Energiequellen 10 gut zu erkennen. Zudem hat die Platine 20 einen zentralen Anschluss 21 zur elektrischen Anbindung der Platine 20 an die Stromversorgung bzw. an die Stromverteileinheit 40.

Vorzugsweise kann die Platine 20 (an ihrer Unterseite) mit dem Träger 8 verbunden sein. Beispielsweise kann die Platine 20 mit dem Träger 8 über eine Wärmeleitpaste direkt verbunden sein. Aneinander anliegende Oberflächen des Trägers 8 und/oder der Platine 20 können bearbeitet, insbesondere glatt gefräst sein.

Vorzugsweise kann die Platine 20 eine Leiterplatte mit einem Metallsubstrat, vorzugsweise einem Kupfersubstrat oder einem Aluminiumsubstrat sein. Dabei kann das Metallsubstrat direkt bzw. über die Wärmeleitpaste (oder ein anderes geeignetes, wärmeleitendes Adhäsionsmittel) an dem Trägermaterial 8 anliegen.

Vorzugsweise können die Energiequellen 10 (an ihrer Unterseite) eine insbesondere metallische, lötfähige Anschlussfläche aufweisen. Die Anschlussfläche kann insbesondere direkt auf das Metallsubstrat der Platine 20 gelötet sein.

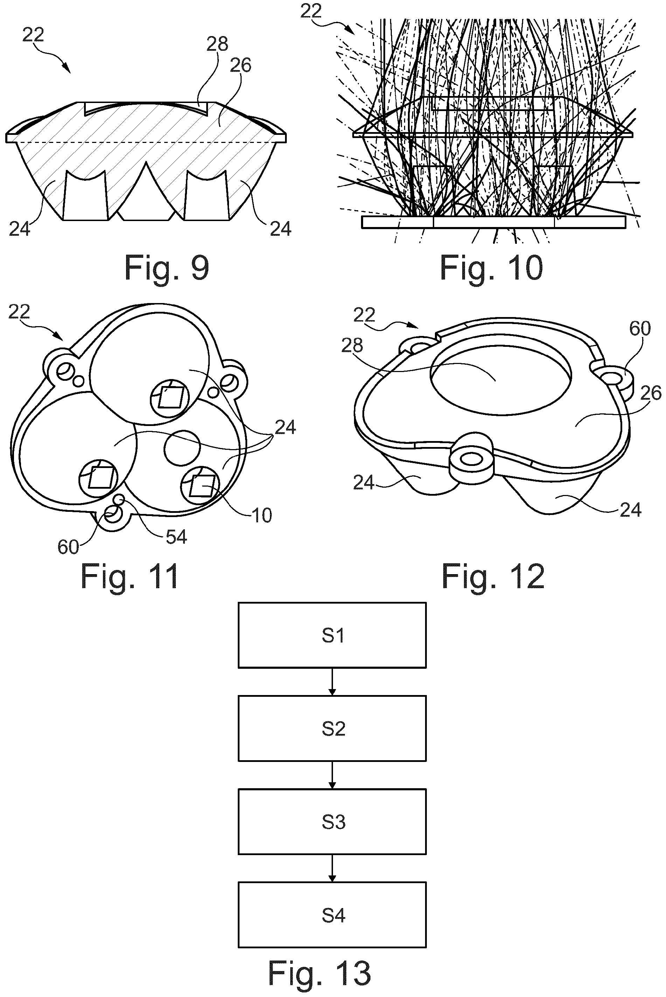

Gemäß einem weiteren ggf. unabhängig von dem Aufweisen und der Ausbildung der Kühlvorrichtung 12 beanspruchbaren Aspekt weist die Heizvorrichtung 4 eine Optik 22 auf. Die Optik 22 dient zum Bündeln der elektromagnetischen Energie der Energiequelle(n) 10. Die Optik 22 ist insbesondere auch in Fign. 9 bis 12 dargestellt. Ein Strahlengang ist insbesondere in Fig. 10 dargestellt.

Vorzugsweise weist die Optik 22 einen Kollimator 24 auf. Der Kollimator 24 dient insbesondere zur Parallelisierung der elektromagnetischen Energie der zugeordneten Energiequelle(n) 10. Der Kollimator 24 ist im Strahlengang der Energiequelle(n) 10 direkt nachgeschaltet.

Vorzugsweise weist die Optik 22 eine Sammellinse 26 auf. Die Sammellinse 26 dient zur Fokussierung/Bündelung der elektromagnetischen Energie der zugeordneten Energiequelle(n) 10. Die Sammellinse 26 ist im Strahlengang dem Kollimator 24 direkt nachgeschaltet. Insbesondere können der Kollimator 24 und die Sammellinse 26 einstückig bzw. aus einem Guss ausgebildet sein.

Insbesondere weist die Optik 22 in jedem Energiemodul für jede einzelne Energiequelle 10 einen eigenen Kollimator 24 und für alle Energiequellen 10 eine gemeinsame Sammellinse 26 auf. Das heißt, dass die Energie von allen Energiequellen 10 eines Energiemoduls, d.h. in diesem Fall drei an einer Platine 20 angebundene Energiequellen 10, zunächst jeweils parallelisiert und dann in einem gemeinsamen Brennpunkt fokussiert werden.

Zudem kann die Optik 22 bzw. die Sammellinse 26 an ihrer Oberseite, insbesondere in einem zentralen Bereich, eine Fresnel-Stufe 28 aufweisen.

Insbesondere in Fig. 3 ist zu erkennen, dass die Heizvorrichtung 4 eine Vielzahl der Energiequellen 10 aufweist, von denen jeweils drei Energiequellen 10 ein Energiemodul bilden. Die drei Energiequellen 10 eines Energiemoduls sind jeweils benachbart angeordnet, etwa im Wesentlichen an den Ecken eines (gleichseitigen) Dreiecks. Auch ist zu erkennen, dass die Heizvorrichtung 4 eine Vielzahl der Energiemodule aufweist, die über den Umfang des Trägers 8 (gleich-)verteilt angeordnet sind. Jedes Energiemodul deckt einen bestimmten Umfangsbereich um den Extruder 6 ab. Vorzugsweise können in Umfangsrichtung benachbarte Energiemodule so angeordnet sind, dass sich ein Energiespot der Energiemodule überlappt.

Vorzugsweise kann eine optische Achse jedes Energiemoduls radial nach innen angestellt sein. Das heißt, dass jedes Energiemodul eine zentrale Achse des Trägers 8 schneidet und damit einen Winkel einschließt.

In der in Fig. 3 dargestellten Ausführungsform weist die Heizvorrichtung 4 zehn Energiemodule mit je drei Energiequellen 10 auf. In der in Fig. 5 dargestellten Ausführungsform weist die Heizvorrichtung 4 acht Energiemodule mit je drei Energiequellen 10 auf. In Abhängigkeit des Durchmessers des Extruders 6 bzw. des Trägers 8 kann die Anzahl an Energiemodule entsprechend variieren.

Vorzugsweise ist der Träger 8 insgesamt gesehen (geschlossen) ringförmig ausgebildet. Der Träger 8 weist eine zentrale Öffnung 30 auf. Durch die zentrale Öffnung 30 kann sich der Extruder 6 hindurch erstrecken. Das heißt, dass der Träger 8 im montierten Zustand um den Extruder 6 herum angeordnet ist.

Der Träger 8 weist eine im Wesentlichen konkav gekrümmte bzw. leicht nach innen angestellte Unterseite auf. Von der Unterseite des Trägers 8 steht eine Umrandung 32 ab, innerhalb der jeweils ein Energiemodul aufgenommen ist. Die Umrandung 32 hat eine im Wesentlichen dreieckigen Querschnitt. An der Umrandung 32 sind Befestigungslöcher 34 ausgebildet, an denen die Optik 22 befestigt, insbesondere anschraubbar oder angeschraubt ist.

Zudem kann die Heizvorrichtung 4 einen Temperatursensor 36 aufweisen. Dabei ist der Temperatursensor 36 insbesondere eingerichtet, eine (Oberflächen-)Temperatur der ausgebrachten Materialschicht zu erfassen. Der Temperatursensor 36 kann insbesondere in Form eines Infrarot-Sensors, vorzugsweise eines Infrarotkamerasensors oder eines Pyrometers, ausgebildet sein. Der Temperatursensor 36 ist (fest) an dem Träger 8 angebracht. Dazu weist der Träger 8 entsprechende Sensoraufnahmeöffnungen 37 auf (vgl. Fig. 5). Der Temperatursensor 36 ist an der Unterseite des Trägers 8 angeordnet. Beispielsweise kann der Temperatursensor 36 an dem Träger radial weiter außen als die Energiemodule angeordnet sein. Alternativ kann der Temperatursensor 36 auch radial weiter innen als die Energiemodule angeordnet sein. Alternativ könnte der Temperatursensor 36 auch innerhalb eines Energiemoduls bzw. innerhalb der Optik 22 angeordnet sein. Das heißt, dass der Temperatursensor 36 koaxial zu einem der Energiemodule angeordnet ist.

Vorzugsweise kann die Heizvorrichtung mehrere der Temperatursensoren 36 aufweisen (vgl. Fig. 3). Insbesondere können die Temperatursensoren 36 über einen Umfang des Trägers 8 (gleich-)verteilt angeordnet sein. In der in Fig. 3 dargestellten Ausführungsform weist die Heizvorrichtung 4 fünf Temperatursensoren 36 auf. In der in Fig. 5 dargestellten Ausführungsform ist der Träger 8 zur Aufnahme von vier Temperatursensoren 36 ausgelegt. In Abhängigkeit des Durchmessers des Extruders 6 bzw. des Trägers 8 kann die Anzahl an Temperatursensoren 36 entsprechend variieren.

Zudem kann die Heizvorrichtung 4 eine Stromversorgung für das Energiemodul oder die Energiemodule aufweisen. Vorzugsweise kann die Stromversorgung eine oder mehrere Stromquelle(n)/Spannungsquelle(n) 38, insbesondere eine Konstantstromquelle/ Konstantspannungsquelle, aufweisen. Die Stromquelle/Spannungsquelle 38 ist in den dargestellten Ausführungsformen nur schematisch dargestellt. Insbesondere kann die Stromquelle/Spannungsquelle 38 ortsfest und/oder separat zu dem Träger 8 bzw. zu dem Extruder 6 angeordnet sein. Insbesondere kann die Stromquelle/Spannungsquelle 38 eingerichtet sein, eine maximale Leistung von bis zu 200 W, 400 W, 500 W, 600 W, 700 W, 800 W, 900 W oder 1000 W auszugeben. Die Stromversorgung kann beispielsweise drei der Stromquellen/Spannungsquellen 38 haben.

Vorzugsweise kann die Stromversorgung eine zentrale Stromverteileinheit 40 und eine Vielzahl von Stromleitungen 42 aufweisen. Dabei verbinden die Stromleitungen 42 jeweils die Stromverteileinheit 40 mit den Energiemodulen bzw. Energiequellen 10. Die Stromverteileinheit 40 kann insbesondere an dem Träger 8 angebracht sein. Insbesondere kann die Stromverteileinheit 40 an einer Oberseite des Trägers 8 angeordnet sein (vgl. Fig. 4). Die Stromverteileinheit 40 ist (eingangsseitig) insbesondere mit der Stromquelle/Spannungsquelle 38 verbunden sowie (ausgangsseitig) insbesondere über die Stromleitungen 42 mit den einzelnen Energiemodulen bzw. Energiequellen 10 verbunden. Die Stromleitungen 42 können insbesondere durch Durchgangslöcher in dem Träger 8 von der Oberseite zu der Unterseite und den dort angeordneten Energiequellen 10 geführt sein.

Gemäß einer bevorzugten Ausführungsform kann die Heizvorrichtung eine Steuereinheit 44 zur Steuerung der Stromversorgung aufweisen. Die Steuereinheit 44 ist in den dargestellten Ausführungsformen nur schematisch dargestellt. Insbesondere kann die Steuereinheit 44 ortsfest und/oder separat zu dem Träger 8 bzw. zu dem Extruder 6 angeordnet sein. Alternativ könnte die Steuereinheit 44 auch an dem Träger 8 angebracht sein. Insbesondere kann die Steuereinheit 44 eingerichtet sein, eine maximale Leistung von mindestens 1 W bis 1000 W, insbesondere von mindestens 40 W bis 800 W, bevorzugt von mindestens 100 W bis 700 W, an dem bzw. jedem Energiemodul anzulegen.

Vorzugsweise kann die Steuereinheit 44 eingerichtet sein, die Energiemodule unabhängig voneinander mit Energie zu versorgen. Insbesondere kann die Steuereinheit 44 eingerichtet sein, in Umfangsrichtung benachbarte, beispielsweise (nur/genau) zwei oder drei, Energiemodule gleichzeitig mit Energie zu versorgen.

Vorzugsweise kann die Steuereinheit 44 eingerichtet sein, in Abhängigkeit einer Bewegungsrichtung des Trägers 8 bzw. einer Druckrichtung des Extruders 6 die Energiemodule mit Energie zu versorgen, insbesondere nur die in der Bewegungsrichtung vorne bzw. in Druckrichtung vor dem Extruder 6 liegenden Energiemodule mit Energie zu versorgen (vgl. Fig. 1).

Vorzugsweise können die Energiequellen 10 eine Vielzahl von Emitterflächen 46, beispielsweise vier, insbesondere gleich großen Emitterflächen 46, aufweisen (vgl. Fig. 7). Die Emitterflächen 46 können vorzugsweise direkt benachbart angeordnet sein. Beispielsweise können vier Emitterflächen 46 in quadratischer Anordnung ausgebildet sein. Insbesondere können alle Emitterflächen 46 in Serie geschaltet sein.

Vorzugsweise können alle Energiequellen 10, d.h. in der dargestellten Ausführungsform die drei Energiequellen 10, (innerhalb) eines Energiemoduls in Serie geschaltet sein.

Wie oben beschrieben, kann der Extruder 6 ausgebildet sein, das Material M aufzuschmelzen und zu plastifizieren. Dazu kann der Extruder 6 eine Aufschmelzvorrichtung 48 aufweisen. Zudem kann der Extruder 6 ausgebildet sein, das aufgeschmolzene und plastifizierte Material strangförmig auszubringen. Dazu kann der Extruder 6 eine Düse 50 aufweisen. Vorzugsweise kann der Extruder 6 einen Materialbehälter 52 mit dem Material M aufweisen. Vorzugsweise kann das Material M aus einem Thermoplast aufgebaut sein.

Insbesondere kann das Material M lichtabsorbierende Additive, insbesondere Kohlenstofffasern oder schwarze Pigmente, wie Ruß, enthalten.

Zudem ist in Fign. 11 und 12 zu erkennen, dass die Optik 22 Pins 54 zur Positionierung aufweisen kann. Die Pins 54 stehen in Richtung zu dem Träger 8 hin vor und greifen in den Träger 8. Dazu weist der Träger 8 entsprechende Pinaufnahmeöffnungen 56 auf (vgl. Fig. 5). Die Pins 8 können entsprechend ausgebildete Löcher 58 in der Platine 20 durchgreifen. Zudem kann die Optik 22 Befestigungslaschen 60 aufweisen, durch die die Optik 22 an dem Träger 8, beispielsweise über Schrauben, befestigbar oder befestigt ist.

Die vorliegende Offenbarung betrifft auch ein Verfahren zur (Material-)Extrusion eines Objekts. Zur Durchführung des Verfahrens wird die offenbarungsgemäße Extrusionsvorrichtung 2 eingesetzt, die die offenbarungsgemäße Heizvorrichtung 4 (und den Extruder 6) aufweist. Das Verfahren ist in Fig. 13 dargestellt.

In dem Verfahren wird in einem ersten Schritt S1 mit dem Extruder 6 eine Materialschicht, insbesondere durch Fused Deposition Modelling, ausgebracht. Vorzugsweise wird in dem Verfahren (insbesondere mit dem Temperatursensor 36) in einem zweiten Schritt S2 eine (Oberflächen-)Temperatur der (zuletzt) ausgebrachten Materialschicht in einem bestimmten (vor dem Extruder 6 liegenden) Bereich erfasst. In dem Verfahren wird in einem dritten Schritt S3 mit der Energiequelle 10 der Heizvorrichtung die (zuletzt) ausgebrachte Materialschicht in dem bestimmten (vor dem Extruder 6 liegenden) Bereich erwärmt. Vorzugsweise wird die Materialschicht dabei so weit erwärmt, dass die (Oberflächen-)Temperatur in einen vorbestimmten Temperaturbereich gebracht wird. In dem Verfahren wird in einem vierten Schritt S4 mit dem Extruder 6 eine weitere Materialschicht auf den bestimmten, durch die Heizvorrichtung 4 erwärmten Bereich ausgebracht. Vorzugsweise kann die Materialschicht dabei aus einem Thermoplast aufgebaut sein und lichtabsorbierende Additive enthalten.

### Bezugszeichenliste

- 2: Extrusionsvorrichtung
- 4: Heizvorrichtung
- 6: Extruder
- 8: Träger
- 10: Energiequelle
- 12: Kühlvorrichtung
- 14: Kühlkanal
- 16: Rippe
- 18: Kühlkanalabschnitt
- 20: Platine
- 21: Anschluss
- 22: Optik
- 24: Kollimator
- 26: Sammellinse
- 28: Fresnel-Stufe
- 30: zentrale Öffnung
- 32: Umrandung
- 34: Befestigungsloch
- 36: Temperatursensor
- 37: Sensoraufnahmeöffnung
- 38: Stromquelle/Spannungsquelle
- 40: Stromverteileinheit
- 42: Stromleitung
- 44: Steuereinheit
- 46: Emitterfläche
- 48: Aufschmelzvorrichtung
- 50: Düse
- 52: Materialbehälter
- 54: Pin
- 56: Pinaufnahmeöffnung
- 58: Loch
- 60: Befestigungslasche

- M: Material
- L: Lichtstrahl
- O: Objekt

## Patentansprüche

1. Heizvorrichtung (4) zum Erwärmen einer durch Extrusion ausgebrachten Materialschicht, mit
einem Träger (8), der eingerichtet ist, sich mit einer Bewegung eines Extruders (6) einer Extrusionsvorrichtung (2) mitzubewegen,
einer an dem Träger (8) angebrachten, elektromagnetischen Energiequelle (10), die eingerichtet ist, elektromagnetische Energie in die ausgebrachte Materialschicht einzubringen,
**dadurch gekennzeichnet, dass**
die Energiequelle (10) eine weiße Leuchtdiode aufweist und die Heizvorrichtung (4) eine Kühlvorrichtung (12) zum Kühlen der weißen Leuchtdiode aufweist.

2. Heizvorrichtung (4) nach Anspruch 1, **dadurch gekennzeichnet, dass** die Heizeinrichtung (4) ein Energiemodul, das durch die Energiequelle (10) oder eine Vielzahl der Energiequellen (10) gebildet ist, oder eine Vielzahl der Energiemodule aufweist,
wobei die Kühlvorrichtung (12) einen, vorzugsweise in dem Träger (8) ausgebildeten, an dem Energiemodul oder den Energiemodulen vorbeiführenden Kühlkanal (14) zum Führen eines Kühlfluids aufweist.

3. Heizvorrichtung (4) nach Anspruch 2, **dadurch gekennzeichnet, dass** die Energiemodule über einen Umfang der Heizvorrichtung (4) verteilt und jeweils zwei in Umfangsrichtung benachbarte Energiemodule so angeordnet sind, dass sich ein Energiespot der Energiemodule überlappt.

4. Heizvorrichtung (4) nach Anspruch 2 oder 3, **dadurch gekennzeichnet, dass** die Heizeinrichtung (4) eine Stromversorgung für das Energiemodul oder die Energiemodule und eine Steuereinheit (44) zur Steuerung der Stromversorgung aufweist,
wobei die Steuereinheit (44) eingerichtet ist, die Energiemodule unabhängig voneinander mit Energie zu versorgen und/oder in Abhängigkeit einer Bewegungsrichtung des Extruders (6) der Extrusionsvorrichtung (2) die Energiemodule mit Energie zu versorgen.

5. Heizvorrichtung (4) nach einem der Ansprüche 2 bis 4, **dadurch gekennzeichnet, dass** jede Energiequelle (10) eine Vielzahl von Emitterflächen (46) aufweist,
wobei die Emitterflächen (46) innerhalb jeder Energiequelle (10) und/oder die Energiequellen (10) innerhalb jedes Energiemoduls mit mehreren Energiequellen (10) in Serie geschaltet sind.

6. Heizvorrichtung (4) nach einem der Ansprüche 2 bis 5, **dadurch gekennzeichnet, dass** die Heizvorrichtung (4) eine Platine (20) oder eine Vielzahl der Platinen (20) aufweist, wobei an jeder Platine (20) vorzugsweise jeweils eines der Energiemodule angebunden ist.

7. Heizvorrichtung (4) nach Anspruch 6, **dadurch gekennzeichnet, dass** die Platine (20) durch eine Leiterplatte mit einem Metallsubstrat, insbesondere einem Kupfersubstrat, gebildet ist, wobei jede Energiequelle (10) vorzugsweise direkt mit dem Metallsubstrat verlötet ist.

8. Heizvorrichtung (4) nach einem der Ansprüche 2 bis 7, **dadurch gekennzeichnet, dass** die Heizvorrichtung (4) eine zentrale Wärmesenke (8) für die Energiequellen (10) aufweist, wobei die zentrale Wärmesenke (8) vorzugsweise über die Platinen (20) mit den Energiequellen (10) verbunden ist.

9. Heizvorrichtung (4) nach Anspruch 8, **dadurch gekennzeichnet, dass** die zentrale Wärmesenke (8) ein metallischer, insbesondere aus Aluminium oder Kupfer aufgebauter, Kühlkörper ist und durch den Träger (8) gebildet ist.

10. Heizvorrichtung (4) nach einem der Ansprüche 1 bis 9, **dadurch gekennzeichnet, dass** die Heizvorrichtung (4) eine Optik (22) zum Bündeln der elektromagnetischen Energie der Energiequelle (10) aufweist, wobei die Optik einen Kollimator (24) zur Parallelisierung der elektromagnetischen Energie und eine Sammellinse (25) zur Fokussierung der elektromagnetischen Energie aufweist.

11. Heizvorrichtung (4) nach Anspruch 10, **dadurch gekennzeichnet, dass** der Kollimator (24) direkt in die Sammellinse (26) übergeht.

12. Heizvorrichtung (4) nach Anspruch 10 oder 11 in Verbindung mit Anspruch 2, **dadurch gekennzeichnet, dass** der Kollimator (24) direkt in die Sammellinse (26) übergeht und/oder dass jeder Energiequelle (10) ein einzelner Kollimator (24) zugeordnet ist und jedem Energiemodul mit mehreren Energiequellen (10) eine gemeinsame Sammellinse (26) zugeordnet ist.

13. Extrusionsvorrichtung (2) zur Extrusion eines Objekts, mit einer Heizvorrichtung (4) nach einem der Ansprüche 1 bis 12, und einem Extruder (6), der ausgebildet ist, ein vorzugsweise strangförmiges Ausgangsmaterial auszubringen, wobei der Träger (8) der Heizvorrichtung (4) an dem Extruder (6) angebracht ist.

14. Verfahren zur Extrusion eines Objekts, mit einer Extrusionsvorrichtung (2) nach Anspruch 13,
wobei mit dem Extruder (6) eine Materialschicht, insbesondere durch Materialextrusion, ausgebracht wird,
wobei mit der Heizvorrichtung (4) eine ausgebrachte Materialschicht in einem bestimmten Bereich erwärmt wird,
wobei mit dem Extruder (6) eine weitere Materialschicht auf den bestimmten, durch die Heizvorrichtung (4) erwärmten Bereich ausgebracht wird.

15. Verfahren nach Anspruch 14, wobei die Materialschicht aus einem Thermoplast aufgebaut ist und lichtabsorbierende Additive enthält.
